# EUROPÄISCHE PATENTSCHRIFT

(11) **EP 1 672 449 B1**
(45) Veröffentlichungstag und Bekanntmachung des Hinweises auf die Patenterteilung: **17.07.2013**
(21) Anmeldenummer: 04029785.5
(22) Anmeldetag: 16.12.2004
(51) Int. Cl.: G05B 19/4061, B25J 9/16

(54) **Vorrichtung und Verfahren zur Erstellung eines kollisionsfreien Weges einer Schleifmaschine**
Apparatus and method for the generation of a collision free path of a grinding tool
Dispositif et méthode pour générer un trajet sans collision pour une ponceuse

(43) Veröffentlichungstag der Anmeldung: 21.06.2006
(73) Patentinhaber: Walter Maschinenbau GmbH, 72072 Tübingen (DE)
(72) Erfinder: Dilger, Christian, 70771 Leinfelden-Echterdingen (DE); Simakov, Michael, Brighton Vic 3186 (AU)
(74) Vertreter: Rüger, Barthelt & Abel

(56) Entgegenhaltungen:
- EP-A- 0 415 067
- EP-A- 0 439 655
- DE-A1- 19 600 538
- ADOLPHS P ET AL: "TRANSFORMATION OF OBSTACLES INTO CONFIGURATION SPACE BY USING A SPECIAL LOOK-UP-TABLE FOR COLLISION-FREE ON-LINE PATH-PLANNING", PROCEEDINGS OF THE INTERNATIONAL CONFERENCE ON CONTROL AND APPLICATIONS. (ICCON) JERUSALEM, APR. 3 - 6, 1989; [PROCEEDINGS OF THE INTERNATIONAL CONFERENCE ON CONTROL AND APPLICATIONS. (ICCON)], NEW YORK, IEEE, US, vol. -, 3 April 1989 (1989-04-03), pages WA-3, XP000090588,

## Beschreibung

Die Erfindung betrifft eine Maschinensteuerungseinrichtung für eine Schleifmaschine oder für vergleichbare Maschinen sowie ein Verfahren zur Bestimmung des Verfahrwegs eines Werkzeugs, insbesondere eines Schleifwerkzeugs und/oder eines entsprechenden Werkstücks.

An Schleifmaschinen oder ähnlichen Maschinen, wie beispielsweise Erodiermaschinen oder dergleichen, ist es häufig erforderlich, das Werkstück und/oder das Werkzeug in Bezug aufeinander zu verstellen, ohne dass es zu Kollisionen kommt. Beispielsweise ist dies der Fall, wenn der mit einem Schleifwerkzeug durchzuführende Bearbeitungsvorgang beendet ist und ein anderes Schleifwerkzeug mit dem Werkstück in Eingriff zu bringen ist. Die Positionierung des Werkstücks und der Schleifwerkzeuge und die Steuerung der zu durchlaufenden Bahnen ist Sache des Maschinensteuerprogramms, das ein Maschineneinrichter oder Bediener mit mehr oder weniger intelligenten Programmierhilfen erstellt hat. Dabei ist es dem Maschineneinrichter in der Regel nicht möglich, zeitoptimale Positionierwege zu erzeugen. Dies gilt insbesondere, wenn diese zur Umgehung von Hindernissen und somit zur Vermeidung von Kollisionen nicht geradlinig sein können. Ist ein Maschinensteuerprogramm erstellt, muss es darüber hinaus vorsichtig und langwierig auf Kollisionsfreiheit überprüft werden, um zu vermeiden, dass Schleifwerkzeuge oder Werkstücke miteinander oder mit anderen Teilen kollidieren. Werden jedoch zur Vermeidung von Kollisionen ersichtlich sichere Wege gefahren, indem beispielsweise nach Beendigung einer Operation das betreffende Werkzeug zunächst in eine so genannte sichere Parkposition verfahren und anschließend die Startposition der darauffolgenden Operation von dieser Parkposition oder einer weiteren Parkposition aus angefahren wird, ergeben sich lange Verfahrwege und große Positionierzeiten. Gerade Schleifoperationen an komplizierten Werkstücken, wie beispielsweise Bohrern, Fräsern oder dergleichen, summieren sich die Positionierzeiten zu einem erheblichen Zeitverlust, den es zu vermeiden gilt.

Aus der EP-A-0415067 A2 sind ein Verfahren und eine Vorrichtung für den Kollisionsschutz bei einem Mehr-Robotersystem bekannt. Zur Feststellung der Kollisionsfreiheit werden Kollisionstabellen berechnet. Dies erfolgt während der Laufzeit des Systems. Der dazu erforderliche Berechnungsaufwand ist beträchtlich.

Im Aufsatz "Transformation of obstacles into configuration spce by using a specxial look-up table for collisionfree on-line path-planning", P. Adolphs, G. Höhn, ICON 89, 3.-6. April 1989, wird vorgeschlagen statische und quasistatische Objekte im Arbeitsraum eines Roboters über eine Referenztabelle zu berücksichtigen. Größe und Position der Objekte werden bestimmt und über ein Mappingverfahren statisch in den Arbeitsraum integriert.

Davon ausgehend ist es Aufgabe der Erfindung, ein Positionierverfahren sowie eine entsprechende Maschinensteuerungseinrichtung zu schaffen, mit dem sich auf einfache Weise in kurzer Zeit Verfahrwege für Werkzeuge und/oder Werkstücke bestimmen lassen, die eine geringe Positionierzeit erfordern.

Diese Aufgabe wird mit der Maschinensteuerungseinrichtung gemäß Anspruch 1 sowie mit dem Verfahren nach Anspruch 12 gelöst:

Die erfindungsgemäße Maschinensteuerungseinrichtung unterstützt den Programmierer bei der Eingabe oder Festlegung von Verfahrwegen, die eine geringe Positionierzeit erfordern. Sie kann auch dazu eingerichtet sein, solche Verfahrwege selbsttätig zu bestimmen. Die Besonderheit der Maschinensteuerungseinrichtung sowie des zugehörigen Steuerverfahrens beruht darauf, dass ein vorab berechneter Datenvorrat vorhanden ist, der für den diskretisierten Arbeitsraum gilt und für jedes Werkzeug und jede Werkzeugposition sowie für jedes Werkstück und jede Werkstückposition sowie jedes Diskretisierungselement des Arbeitsraums einen Kollisionsparameter enthält. Dieser ist beispielsweise Null wenn keine Kollision vorliegt und Eins wenn für die jeweilige Werkstück- und Werkzeugposition (die durch einen Punkt in dem Raum der Maschinenkoordinaten bestimmt wird) eine Kollision d.h. Überschneidung zwischen Werkzeug und Werkstück vorliegt. Ist beispielsweise ein spezieller Weg des Werkstücks durch den Arbeitsraum und/oder des Werkzeugs durch den Arbeitsraum vorgesehen kann durch einfaches Nachsehen in dem Datenvorrat ermittelt werden, ob der vorgesehene Weg Kollisionen enthält oder nicht. Dies kann sowohl im Wege einer Überprüfung von festgelegten Wegen geschehen als auch als unterstützende Maßnahme während der Festlegung von Verfahrwegen.

Die Ermittlung des Datenvorrats ist ein ausgesprochen zeitintensiver Vorgang, der jedoch nur einmalig durchgeführt werden muss. Wird beispielsweise von einem Arbeitsraum ausgegangen, der in allen drei Raumrichtungen jeweils in hundert diskrete Schritt eingeteilt ist, ergeben sich bereits 10.000 Diskretisierungselemente. Damit kann ein erstes, z.B. ebenfalls diskretisiertes Werkzeug bei festgelegter Orientierung des Werkstücks 10.000 verschiedene Positionen einnehmen. Kann das Werkstück z.B. 100 diskrete Orientierungen einnehmen, hat der diskrete Arbeitsraum 1 Mio. Punkte. Für jeden Punkt, d.h. für jede diskrete Werkstück-Werkzeug-Konstellation (Werkstückposition und Werkzeugposition im Arbeitsraum) wird dann im gesamten Arbeitsraum jedem Diskretisierungselement (Zelle) ein Kollisionsparameter von 0 oder 1 zugeordnet. Berühren oder überschneiden sich das Werkstück und das Werkzeug nicht sind alle Zellen Null. Kommt es zur Berührung oder Überscheidung sind nur die Zellen, in denen eine Berührung oder Überschneidung vorhanden ist, beispielsweise Eins.

Die Bestimmung der Kollisionsparameter in der genannten Weise erfolgt vorzugsweise nun für jeden diskretisierten Werkzeugtyp in Kombination mit jedem diskretisierten Werkstücktyp, wobei als Werkstücke vorzugsweise die geometrischen Formen von Rohlingen genommen werden. Alle diese Konstellationen gehen dann in den Datenvorrat ein. Es hat sich gezeigt, dass die Berechnung eines solchen Datenvorrats auch auf sehr leistungsfähigen Rechnern mehr als einen Tag in Anspruch nehmen kann. Der Datenvorrat bildet dann aber eine Look-up-Tabelle, anhand derer ein vorgesehener Weg eines Schleifwerkzeugs und/oder eines Werkstücks binnen weniger Sekunden oder, bei entsprechender Datenorganisation, sogar noch schneller auf Kollisionsfreiheit geprüft werden kann.

Damit schafft das erfindungsgemäße Verfahren sowie die erfindungsgemäße Maschinensteuerungseinrichtung jeweils für sich genommen eine Basis, um beim Programmieren von Verfahrwegen oder beim automatischen Erzeugen derselben eine Überprüfung auf Kollisionsfreiheit vornehmen zu können. Insbesondere können zeitgünstige Verfahrwege durch wiederholten Rückgriff auf den Datenvorrat sehr schnell bestimmt werden.

Der Datenvorrat muss beim Maschinenhersteller lediglich ein einziger Mal ermittelt werden. Er kann dann auf alle vorhandenen Maschinen oder Schleifmaschinen kopiert werden und ermöglicht dann die Bestimmung eines günstigen Verfahrwegs. Beispielsweise wird dazu zwischen allen denkbaren Pfaden zwischen einem Anfangspunkt und einem Endpunkt der zu bestimmenden Bahn ein kollisionsfreier Pfad ausgewählt, der einem optimalen Pfad möglichst nahe kommt. Dazu können dann bekannte Standardverfahren verwendet werden.

In Einzelfällen mag es genügen, wenn der Datenvorrat nur die Diskretisierungselemente des Arbeitsraums und deren Kollisionsparameter umfasst, die beim Positionieren auch zu durchlaufen sind. Evtl. können zu Randbereichen des Arbeitsraums gehörige Diskretisierungselemente weg gelassen werden. Es wird jedoch als vorteilhaft angesehen, alle Diskretisierungselemente des Arbeitsraums zu umfassen, so dass jeder denkbare Kollisionsfall in dem Datenvorrat enthalten ist.

Weiter wird es bevorzugt, alle Werkzeuge, die an der betreffenden Maschine vorkommen können, wobei die Werkzeuge durch Werkzeugdiskretisierungselemente beschrieben sind, die jeweils ein Werkzeugmodell bilden. Die Werkstücke sind ebenfalls diskretisiert, wobei als Werkstücke vorzugsweise die auf der betreffenden Schleifmaschine zu bearbeitenden Rohlinge in einfachen geometrischen Formen, wie Zylindern, Kegeln, gestuften Zylindern und dergleichen, diskretisiert als Werkstückmodelle dienen.

Das Verfahren eignet sich besonders zur Anwendung an Schleifmaschinen, die lediglich einen geringen Materialabtrag haben, so dass sich die Werkstücke während der Bearbeitung von ihrer Außenkontur her nur wenig verändern. Die Werkstückmodelle der Rohlinge bleiben somit trotz Bearbeitungsfortschritts an den Werkstücken gültig.

Der Datenvorrat besteht aus einer indizierten Liste, d.h. einer Kette von Nullen und Einsen, wobei in der Regel lange Ketten von Nullen auftreten. Er ist somit von vornherein gut komprimierbar. Die Datenkompression kann jeweils auf Paarungen von Werkzeugmodellen und Werkstückmodellen beschränkt und durchgeführt werden, so dass zur Überprüfung der Kollisionsfreiheit von Pfaden eines bestimmten Werkstücks und eines bestimmten Werkzeugs lediglich ein Teildatenvorrat dekomprimiert (entpackt) werden muss.

Weitere Einzelheiten vorteilhafter Ausführungsformen der Erfindung ergeben sich aus der Zeichnung, aus der Beschreibung oder aus Ansprüchen.

In der Zeichnung ist ein Ausführungsbeispiel der Erfindung veranschaulicht. Es zeigen:
- Figur 1: eine Schleifmaschine und deren Steuereinrichtung in aufs Äußerste schematisierter Darstellung,
- Figur 2: einen zweidimensionalen diskretisierten Arbeitsraum mit einem diskretisierten Werkstückmodell und einem diskretisierten Werkzeugmodell, die sich überschneiden, in schematisierter Darstellung,
- Figur 3: einen Vorrat von diskretisierten Werkzeugmodellen in schematisierter Darstellung,
- Figur 4: einen Vorrat von diskretisierten Werkzeugmodellen in schematisierter Darstellung,
- Figur 5: die Struktur des Datenvorrats, der die Kollisionsparameter bestimmt, als Formel und
- Figur 6: die Bestimmung eines kollisionsfreien Pfads um ein im Arbeitsraum diskretisiertes Hindernis an einem zweidimensionalen Beispiel in schematisierter Darstellung.

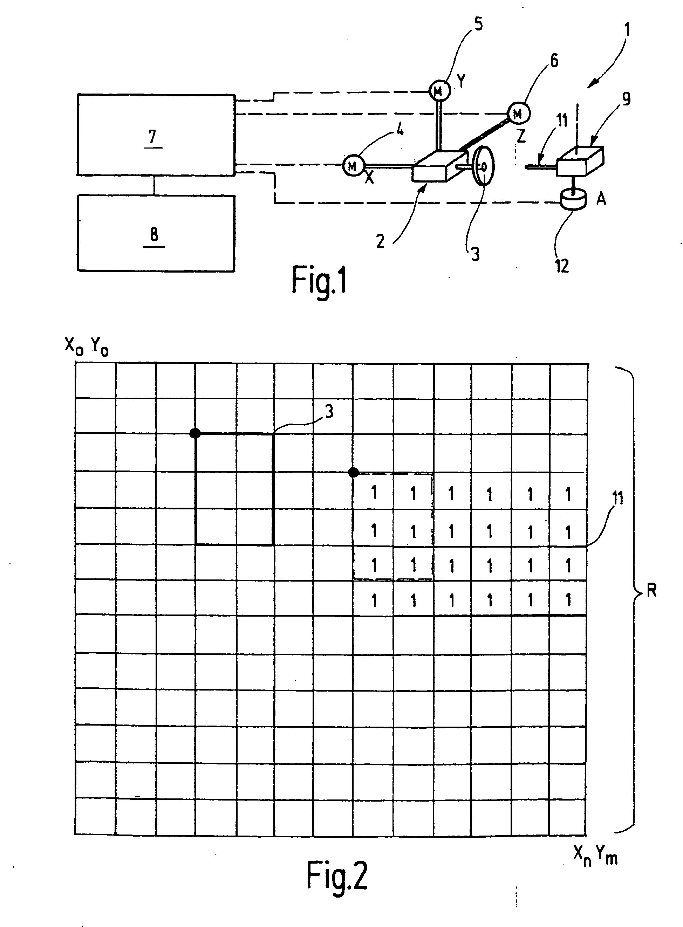

In Figur 1 ist eine Schleifmaschine 1 in aufs Äußerste schematisierter Darstellung veranschaulicht. Zu ihr gehört ein Schleifkopf 2 mit einem Schleifwerkzeug 3, z.B. einer Schleifscheibe. Der Schleifkopf 2 ist in mehreren Richtungen, beispielsweise in drei Richtungen X, Y, Z, linear verstellbar. Zur Verstellung dienen entsprechende Antriebe 4, 5, 6, die über Steuerleitungen mit einer Steuereinrichtung 7 verbunden sind. Diese wird z.B. durch einen Maschinensteuercomputer gebildet, der mit einer Speichereinheit 8 verbunden ist. Außerdem gehört zu der Schleifmaschine 1 ein Werkstückhalter 9, in dem in Figur 1 zur Veranschaulichung ein stabförmiger Rohling 11 gelagert ist. Der Werkstückhalter 9 kann beispielsweise um eine A-Achse drehbar gelagert sein. Ein entsprechender Antrieb 12 ist mit der Steuereinheit 7 verbunden. Wenn der Schleifkopf 2 z.B. lediglich in Y- und Z-Richtung bewegbar ist, kann der Werkstückhalter 9 zusätzlich in X-Richtung bewegbar sein. Der Antrieb 4 ist dann mit dem Werkzeughalter 9 verbunden.

Die Koordinaten X, Y, Z und A bilden einen vierdimensionalen Arbeitsraum für die Bewegung der Schleifscheibe 3 und des Rohlings 11. Die Steuereinrichtung 7 steuert die Bewegungen der Schleifscheibe 3 und des Rohlings 11, um ein gewünschtes Schleifergebnis zu erzielen. Es steuert außerdem die Bewegung der Schleifscheibe 3 und/oder des Rohlings 11, um z.B. verschiedene nicht weiter veranschaulichte Werkzeuge nacheinander mit dem Rohling 11 in Eingriff zu bringen. Dabei müssen der Schleifkopf 2 und der Werkstückträger 9 in möglichst kurzer Zeit verfahren werden, d.h. es werden zeitoptimale oder nahezu zeitoptimale oder zumindest zeitgünstige Verfahrwege gesucht. Allerdings darf es dabei keineswegs zu Kollisionen zwischen der Schleifscheibe 3 und dem Rohling 11 oder anderen Elementen kommen. Die Steuereinrichtung 7 ist deshalb in der Lage, vorgeschlagene Wege in dem vierdimensionalen Arbeitsraum auf Kollisionen zu überprüfen. Dazu nutzt sie einen in der Speichereinheit 8 vorhandenen Datenvorrat, der für alle möglichen Positionen der Schleifscheibe 3 und des Rohlings 11 in dem diskretisierten vierdimensionalen Arbeitsraum einen Kollisionsparameter bereithält. Dies bedeutet, dass für alle diskreten X-, Y-, Z-Positionen der Schleifscheibe 3, kombiniert mit allen diskretisierten Drehpositionen (A-Positionen) des Rohlings 11 festgelegt ist, ob eine Überschneidung (Kollision) zwischen dem Volumen der Schleifscheibe 3 und dem Rohling 11 vorliegt. Um dies zu veranschaulichen, ist in Figur 2 ein zweidimensionales Beispiel für einen Arbeitsraum R angegeben. Seine diskretisierten Koordinaten gehen von x₀ bis xₙ und von x₀ bis yₘ. Der diskretisierte Arbeitsraum R umfasst somit alle möglichen diskreten Relativpositionen zwischen der Schleifscheibe 3 und dem Werkstück 11, wenn lediglich eine zweiachsige Verstellbarkeit gegeben ist (Verstellbarkeit in X und in Y). Es wird nun das Werkzeug 3, das durch die Koordinaten xₖ, yₗ gekennzeichnet ist, probeweise in jeden Punkt des diskreten Arbeitsraums verschoben, wobei seine Koordinaten xₖ, yₗ mit dem Kollisionsparameter "1" belegt werden, wenn eine Überschneidung vorhanden ist und ansonsten mit einer 0. In Figur 2 sind die mit 0 belegten Felder leer.

Entsprechend werden die Kollisionsparameter 0 oder 1 auch für einen drei- oder vierdimensionalen Arbeitsraum bestimmt, d.h. es wird für jede mögliche Position des Werkzeugs 3 in Kombination mit jeder möglichen Position des Werkstücks 11 der jeweilige Kollisionsparameter bestimmt. Die Kollisionsparameter werden als Datenvorrat D in der Speichereinheit 8 abgespeichert. Schematisch ausgedrückt, besteht der Datenvorrat D aus der Überlagerung des Werkzeugs 3 mit dem Werkstück 11 für den gesamten Arbeitsraum R. Die Überlagerung, die hier schematisch als Operator overl ausgedrückt wird, beinhaltet den Test auf Überschneidung für jede Relativposition von Werkzeug 3 und Werkstück 11 in dem diskretisierten Arbeitsraum.

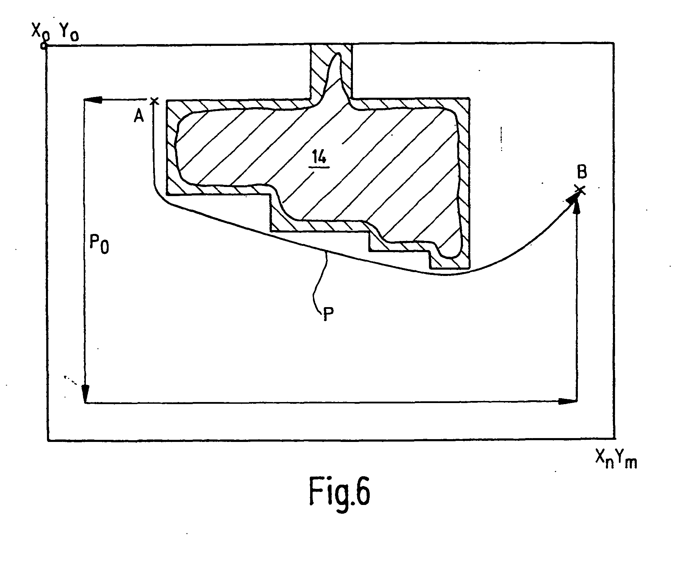

Die Steuereinrichtung 7 bestimmt nun einen Pfad P, wie anhand des weiterhin zweidimensionalen Beispiels in Figur 6 wie folgt ersichtlich wird:
In dem diskretisierten Arbeitsraum (hier zweidimensional X, Y) wird ein kollisionsfreier Pfad von A nach B gesucht. Dieser soll erträglich kurz sein. Die kollisionsgefährdeten Bereiche sind schraffiert gekennzeichnet - in dem Datenvorrat D sind sie jeweils durch eine 1 markiert. Das Verfahren sucht nun in dem durch die Diskretisierung vorgegebenen Raster einen Weg, der um den kollisionsgefährdeten Bereich herumführt. Dieser Weg ist weiter als ein optimaler, unmittelbar an dem krummlinig begrenzten inneren Bereich 14, der die Kollisionszone kennzeichnet, angelegter Weg. Der Weg P ist aber wesentlich günstiger als ein herkömmlich durchlaufender, über Parkpositionen führender Weg P₀, der in Figur 6 schematisch eingetragen ist.

Für die reale Schleifmaschine 1 genügen keine zweidimensionalen Raster sondern es wird entsprechend mit dem vierdimensionalen Arbeitsraum gearbeitet. D.h. für alle Koordinatenquartette X, Y, Z, A, die jeweils eine mögliche Relativposition von Werkzeug zu Werkstück kennzeichnen, wird der Kollisionsparameter 0 oder 1 bestimmt und abgespeichert. Bei der Wegsuche kann dann auf diesen Datenvorrat zurückgegriffen werden, um ohne Rechenaufwand, lediglich durch Rückgriff auf die gespeicherten Werte festzustellen, ob der gewählte Pfad oder ein gerade eben ermittelter Teilpfad oder ein von einem Bediener eingegebener Teilpfad kollisionsfrei ist oder nicht.

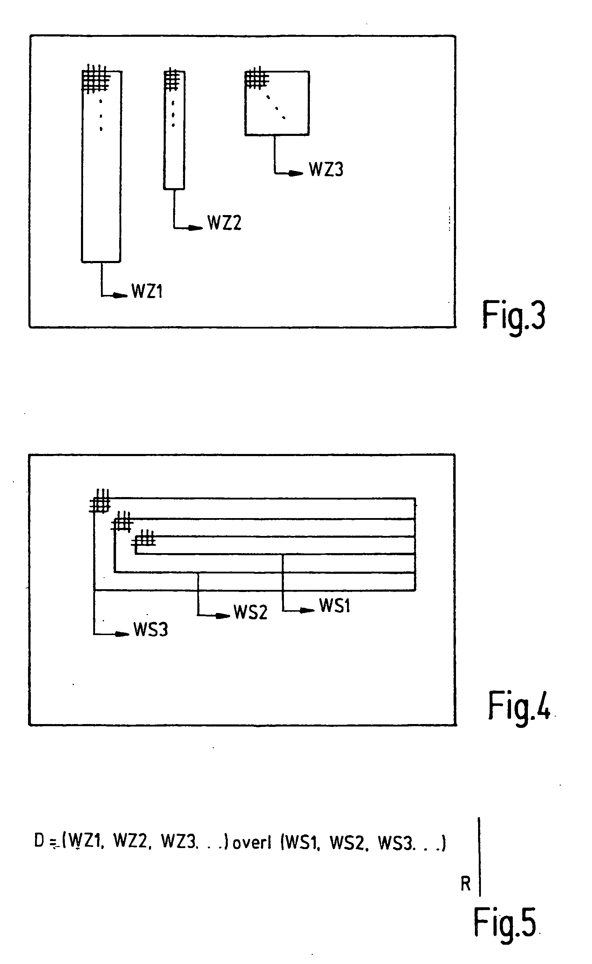

Vorzugsweise werden die Kollisionsparameter nicht nur für ein spezielles Werkstück und ein spezielles Werkzeug und den gesamten mehrdimensionalen Arbeitsraum bestimmt sondern zugleich für alle diskretisierten Werkzeuge und alle diskretisierten Werkstücke. Dies ist in den Figuren 3 und 4 veranschaulicht. Figur 3 veranschaulicht einen Vorrat von Werkzeugen WZ1, WZ2, WZ3, der z.B. Schleifscheiben innerhalb eines Rasters in allen vorkommenden Größen und Formen umfassen kann. Die Zahl der Werkzeugmodelle ist dabei prinzipiell nicht begrenzt. Im vorliegenden Beispiel sind es drei. Ebenso sind mehrere Werkstückmodelle, beispielsweise drei Werkstückmodelle für unterschiedliche große zylindrische Rohlinge vorhanden. Vorzugsweise sind die unterschiedlichen Werkstückmodelle WS1, WS2, WS3 innerhalb der gegeben Diskretisierung jeweils um einen Diskretisierungsschritt unterschieden. Es können jedoch auch grobere Abstufungen gewählt werden, wie es in Figur 4 angedeutet ist. Es wird nun für den gesamten diskretisierten Arbeitsraum R die Überlagerung aller Werkzeugmodelle mit allen Werkstückmodellen gebildet, wie es in Figur 5 veranschaulicht ist, um den Datenvorrat zu erzeugen. Dieser Datenvorrat umfasst dann die jedem Punkt des diskretisierten Arbeitsraums R zugeordneten Kollisionsparameter für jede mögliche Paarung WZI, WSJ (wobei I und J jeweils die Nummer des Werkzeugmodells und des Werkstückmodells bezeichnen) und für mögliche Relativpositionierung. Der Datensatz umfasst, obwohl jeder Kollisionsparameter lediglich ein Bit benötigt, für einen vierdimensionalen Arbeitsraum, dessen Koordinaten jeweils in hundert diskrete Schritte eingeteilt sind, mehrere Gigabyte, und zwar auch dann wenn nur mit einer relativ geringen Anzahl von beispielsweise drei Werkzeugmodellen und drei Werkstückmodellen gearbeitet wird. Zur Berechnung dieser Datenmenge ist ein leistungsfähiger Rechner u.U. mehrere Tage beschäftigt. Der erzeugte Datensatz gilt jedoch für den vorgegebenen Schleifmaschinentyp universell, d.h. er kann ohne Weiteres auf jede hergestellte Schleifmaschine kopiert werden. Eine Neuberechnung ist dann nicht erforderlich.

Der Datensatz kann, wie erwähnt, in komprimierter Form abgespeichert werden. Vorzugsweise wird er in Teildatensätze aufgeteilt, wobei jeder Teildatensatz eine Werkzeug-Werkstück-Paarung wiedergibt (DT = WZI overl WSJ/R). Zur Bestimmung der Kollisionsfreiheit eines Positionierwegs braucht dann nur der Teildatensatz dekomprimiert werden, der das hier interessierende Werkzeug und das interessierende Werkstück betrifft. Auf den entpackten Datensatz kann bei der Bestimmung oder Überprüfung eines Pfades zugegriffen werden, wobei das Ergebnis (Kollisionsfreiheit des Pfades ja oder nein) praktisch sofort vorliegt.

Zur Bestimmung von zeitgünstigen kollisionsfreien Wegen wird einer Maschinensteuerung einer Schleifmaschine ein Datensatz D zur Verfügung gestellt, der in jedem diskretisierten Koordinatenpunkt (X, Y, Z, A) sowie für jede Kombination der diskretisierten Werkzeugmodelle WZI und Werkstückmodelle WSJ einen Kollisionsparameter 0 oder 1 aufweist. Dieser zeigt an, ob für die dem entsprechenden Koordinatenpunkt X, Y, Z, A zugeordnete Konstellation, d.h. Relativposition, von Werkstück 11 und Werkzeug 3 eine Kollision oder räumliche Überschneidung des Werkzeugs und des Werkstücks zur Folge hat oder nicht. Dieser Datenvorrat D bildet eine Look-up-Tabelle, die zur Überprüfung von gegebenen Pfaden oder zum Strecken oder schrittweisen Aufbau von Pfaden genutzt werden kann. Die Berechnung zeitgünstiger Pfade kann auch bei beschränkten Rechenkapazitäten in wenigen Sekunden durchgeführt werden, weil die zeit- und rechenintensive Kollisionsberechnung entfällt. Es wird auf die vorausberechnete Look-up-Tabelle zurück gegriffen.

## Patentansprüche

1. Maschinensteuerungseinrichtung für eine Schleifmaschine (1) mit einem Schleifkopf (2) und mit einem Werkstückträger (9), die durch eine mehrachsige Betätigungseinrichtung (4, 5, 6, 12) in mehreren Richtungen (X, Y, Z, A) in einem Arbeitsraum (R) in Bezug aufeinander bewegbar sind, wobei die Betätigungseinrichtung (4, 5, 6, 12) an die Maschinensteuereinrichtung (7, 8) angeschlossen ist,
mit einer Verarbeitungseinheit (7) und mit einer Speichereinheit (8),
**dadurch gekennzeichnet,**
**dass** die Speichereinheit (8) einen vorab berechnete Datenvorrat (D) für den in Diskretisierungselemente (xᵢyⱼ) unterteilten Arbeitsraum (R) bereithält,
**dass** den Diskretisierungselementen (xᵢyⱼ) für vorgegebene Werkzeuge (3) und für vorgegebene Werkstücke (11) in jeweils vorgegebenen Positionen Kollisionsparameter (0 oder 1) zugeordnet sind und
**dass** die Kollisionsfreiheit eines Verfahrweges (P) anhand des Datenvorrates (D) durch Abfrage der vorhandenen Kollisionsparameter (0 oder 1) für den Verfahrweg (P) festgestellt wird,
wobei der Datenvorrat (D) für alle möglichen Positionen der Schleifscheibe (3) und des Rohlings (11) in dem diskretisierten, vier Dimensionen (X-, Y-, Z-, A-Position) umfassenden Arbeitsraum (R) einen Kollisionsparameter (0 oder 1) enthält,
und wobei die Kollisionsfreiheit des Verfahrwegs (P) vorliegt, wenn der vorgesehene Verfahrweg (P) keine Diskretisierungselemente (xᵢyⱼ) enthält, deren Kollisionsparameter (0 oder 1) für eine Kollision steht.

2. Maschinensteuerungseinrichtung nach Anspruch 1, **dadurch gekennzeichnet, dass** der Datenvorrat (D) alle Diskretisierungselemente (xᵢyⱼ) des Arbeitsraums (R) umfasst.

3. Maschinensteuerungseinrichtung nach Anspruch 1, **dadurch gekennzeichnet, dass** die Werkzeuge (3) durch diskrete Werkzeugmodelle (WZ1, WZ2, WZ3) beschrieben sind.

4. Maschinensteuerungseinrichtung nach Anspruch 1, **dadurch gekennzeichnet, dass** die Werkstücke (11) durch diskrete Werkstückmodelle (WS1, WS2, WS3) beschrieben sind.

5. Maschinensteuerungseinrichtung nach Anspruch 1, **dadurch gekennzeichnet, dass** zur Beschreibung der Werkstücke (11) die geometrischen Formen von Rohlingen zugrunde gelegt sind.

6. Maschinensteuerungseinrichtung nach Anspruch 1, **dadurch gekennzeichnet, dass** der Datenvorrat (D) Kollisionsparameter (0 oder 1) für wenigstens ein Werkstückmodell (WS1) und für wenigstens ein Werkzeugmodell (WZ1) für den gesamten Arbeitsraum und für alle einnehmbaren Werkstückpositionen umfasst.

7. Maschinensteuerungseinrichtung nach Anspruch 1, **dadurch gekennzeichnet, dass** der Datenvorrat (D) Kollisionsparameter für wenigstens ein Werkstückmodell (WS1) und für wenigstens ein Werkzeugmodell (WZ1) für den gesamten Arbeitsraum und für alle einnehmbaren Werkzeugpositionen umfasst.

8. Maschinensteuerungseinrichtung nach Anspruch 1, **dadurch gekennzeichnet, dass** der Datenvorrat (D) Kollisionsparameter für alle Werkstückmodelle (WS1, WS2, WS3, ...) und für alle Werkzeugmodelle (WZ1, WZ2, WZ3, ...) für den gesamten Arbeitsraum und für alle einnehmbaren Werkstückpositionen umfasst.

9. Maschinensteuerungseinrichtung nach Anspruch 1, **dadurch gekennzeichnet, dass** der Datenvorrat (D) komprimiert ist.

10. Maschinensteuerungseinrichtung nach Anspruch 1, **dadurch gekennzeichnet, dass** der Datenvorrat (D) in Teildatenvorräte (D1, D2, D3, ...) aufgeteilt ist, die jeweils die Kollisionsparameter (0/1) für eine Werkstück-Werkzeug-Kombination (WZ1-WS1; WZ1-WS2; WZ1-WZ3; WZ2-WS1; WZ2-WS2 ...) für alle möglichen Positionen umfassen.

11. Maschinensteuerungseinrichtung nach Anspruch 10, **dadurch gekennzeichnet, dass** die Teildatenvorräte (D1, D2, D3,...) jeweils gesondert komprimiert sind.

12. Verfahren zur Bestimmung eines Verfahrweges eines Schleifwerkzeuges (3) und/oder eines Werkstücks (11) bei einer Schleifmaschine (1), mit einem Schleifkopf (2) und mit einem Werkstückträger (9), die durch eine mehrachsige Betätigungseinrichtung (4, 5, 6, 12) in mehreren Richtungen (X, Y, Z, A) in einem Arbeitsraum (R) in Bezug aufeinander bewegbar sind, wobei die Betätigungseinrichtung (4, 5, 6, 12) an die Maschinensteuereinrichtung (7, 8) angeschlossen ist, und wobei die Schleifmaschine (1) eine Verarbeitungseinheit (7) mit einer Speichereinheit (8) aufweist,
wobei in der Speichereinheit (8) ein vorab berechneter Datenvorrat (D) für den in Diskretisierungselemente (xᵢyⱼ) unterteilten Arbeitsraum (R) bereitgehalten wird,
wobei den Diskretisierungselementen (xᵢyⱼ) vorab für vorgegebene Werkzeuge (3) und für vorgegebene Werkstücke (11) in jeweils vorgegebenen Positionen Kollisionsparameter (0 oder 1) zugeordnet werden und
wobei die Kollisionsfreiheit eines Verfahrweges (P) anhand des Datenvorrates (D) durch Abfrage der vorhandenen unveränderlichen und vorausberechenbaren Kollisionsparameter (0 oder 1) für den Verfahrweg (P) festgestellt wird,
wobei der Datenvorrat (D) für alle möglichen Positionen der Schleifscheibe (3) und des Rohlings (11) in dem diskretisierten, vier Dimensionen (X-, Y-, Z-, A-Position) umfassenden Arbeitsraum (R) einen Kollisionsparameter (0 oder 1) enthält,
und wobei die Kollisionsfreiheit des Verfahrwegs (P) vorliegt, wenn der vorgesehene Verfahrweg (P) keine Diskretisierungselemente (xᵢyⱼ) enthält, deren Kollisionsparameter (0 oder 1) für eine Kollision steht.

## Claims

1. Machine control device for a grinding machine (1) with a grinding attachment (2) and with a workpiece holder (9), which are movable in multiple directions (X, Y, Z, A) relative to one another in a work area (R) by means of a multiaxial operating device (4, 5, 6, 12), wherein the operating device (4, 5, 6, 12) is connected to the machine control device (7, 8),
with a processing unit (7) and with a memory unit (8),
**characterised in that**
the memory unit (8) holds ready a previously calculated pool of data (D) for the work area (R) that is sub-divided into quantisation elements (xᵢyⱼ),
that collision parameters (0 or 1) are assigned to the quantisation elements (xᵢxᵢ) for predefined tools (3) and for predefined workpieces (11) in respectively predefined positions and
that the collision freedom of a travel path (P) is determined on the basis of the data pool (D) by interrogating the existing collision parameters (0 or 1) for the travel path (P),
wherein the data pool (D) contains a collision parameter (0 or 1) for all possible positions of the grinding wheel (3) and the blank (11) in the quantised work area (R) comprising four dimensions (X-, Y-, Z-, A-position),
and wherein the collision freedom of the travel path (P) is present if the provided travel path (P) contains no quantisation elements (xᵢyⱼ), the collision parameter (0 or 1) of which stands for a collision.

2. Machine control device according to claim 1, **characterised in that** the data pool (D) comprises all quantisation elements (xᵢyⱼ) of the work area (R).

3. Machine control device according to claim 1, **characterised in that** the tools (3) are described by discrete tool models (WZ1, WZ2, WZ3).

4. Machine control device according to claim 1, **characterised in that** the workpieces (11) are described by discrete workpiece models (WS1, WS2, WS3).

5. Machine control device according to claim 1, **characterised in that** the geometric shapes of blanks are taken as basis for description of the workpieces (11).

6. Machine control device according to claim 1, **characterised in that** the data pool (D) comprises collision parameters (0 or 1) for at least one workpiece model (WS1) and for at least one tool model (WZ1) for the entire work area and for all workpiece positions that can be occupied.

7. Machine control device according to claim 1, **characterised in that** the data pool (D) comprises collision parameters for at least one workpiece model (WS1) and for at least one tool model (WZ1) for the entire work area and for all tool positions that can be occupied.

8. Machine control device according to claim 1, **characterised in that** the data pool (D) comprises collision parameters for all workpiece models (WS1, WS2, WS3, ...) and for all tool models (WZ1, WZ2, WZ3, ...) for the entire work area and for all workpiece positions that can be occupied.

9. Machine control device according to claim 1, **characterised in that** the data pool (D) is compressed.

10. Machine control device according to claim 1, **characterised in that** the data pool (D) is divided into sub-pools of data (D1, D2, D3, ...), which respectively comprise the collision parameters (0/1) for a workpiece-tool combination (WZ1-WS1; WZ1-WS2; WZ1-WS3; WZ2-WS1; WZ2-WS2 ...) for all possible positions.

11. Machine control device according to claim 10, **characterised in that** the sub-pools of data (D1, D2, D3, ...) arc respectively separately compressed.

12. Method for determining a travel path of a grinding tool (3) and/or a workpiece (11) in a grinding machine (1), with a grinding attachment (2) and with a workpiece holder (9), which are movable in multiple directions (X, Y, Z, A) relative to one another in a work area (R) by means of a multiaxial operating device (4, 5, 6, 12), wherein the operating device (4, 5, 6, 12) is connected to the machine control device (7, 8), and wherein the grinding machine (1) has a processing unit (7) and with a memory unit (8),
wherein a previously calculated pool of data (D) for the work area (R) that is sub-divided into quantisation elements (xᵢyⱼ) is held ready in the memory unit (8), wherein collision parameters (0 or 1) are assigned to the quantisation elements (xᵢyⱼ) beforehand for predefined tools (3) and for predefined workpieces (11) in respectively predefined positions and
wherein the collision freedom of a travel path (P) is determined on the basis of the data pool (D) by interrogating the existing unchangeable and precalculable collision parameters (0 or 1) for the travel path (P),
wherein the data pool (D) contains a collision parameter (0 or 1) for all possible positions of the grinding wheel (3) and the blank (11) in the quantised work area (R) comprising four dimensions (X-, Y-, Z-, A-position),
and wherein the collision freedom of the travel path (P) is present if the provided travel path (P) contains no quantisation elements (xᵢyⱼ), the collision parameter (0 or 1) of which stands for a collision.

## Revendications

1. Dispositif de commande de machine pour une meuleuse (1) comportant une tête de meulage (2) et un porte-pièce (9) qui peuvent être déplacés l'un par rapport à l'autre dans plusieurs directions (X, Y, Z, A) dans un espace de travail (R) par un dispositif d'actionnement multiaxial (4, 5, 6, 12), le dispositif d'actionnement (4, 5, 6, 12) étant connecté au dispositif de commande de machine (7, 8), et comportant une unité de traitement (7) et une unité de mémorisation (8), **caractérisé en ce que** l'unité de mémorisation (8) fournit un stock de données (D) calculé à l'avance pour l'espace de travail (R) divisé en éléments de discrétisation (xᵢyⱼ), **en ce que** des paramètres de collision (0 ou 1) sont associés aux éléments de discrétisation (xᵢyⱼ) pour des outils donnés (3) et pour des pièces données (11) dans des positions données, et **en ce que** l'absence de collision d'une course de déplacement (P) est vérifiée à l'aide du stock de données (D) par interrogation des paramètres de collision existants (0 ou 1), le stock de données (D) contenant un paramètre de collision (0 ou 1) pour toutes les positions possibles du disque de meulage (3) et de la pièce brute (11) dans l'espace de travail (R) discrétisé comprenant quatre dimensions (position X, Y, Z, A), et l'absence de collision de la course de déplacement (P) étant vérifiée lorsque la course de déplacement (P) prévue ne contient aucun élément de discrétisation (xᵢyⱼ) dont le paramètre de collision (0 ou 1) représente une collision.

2. Dispositif de commande de machine selon la revendication 1, **caractérisé en ce que** le stock de données (D) comprend tous les éléments de discrétisation (xᵢyⱼ) de l'espace de travail (R).

3. Dispositif de commande de machine selon la revendication 1, **caractérisé en ce que** les outils (3) sont décrits par des modèles d'outil discrets (WZ1, WZ2, WZ3).

4. Dispositif de commande de machine selon la revendication 1, **caractérisé en ce que** les pièces (11) sont décrites par des modèles de pièce discrets (WS1, WS2, WS3).

5. Dispositif de commande de machine selon la revendication 1, **caractérisé en ce que** les pièces (11) sont décrites sur la base des formes géométriques de pièces brutes.

6. Dispositif de commande de machine selon la revendication 1, **caractérisé en ce que** le stock de données (D) comprend des paramètres de collision (0 ou 1) pour au moins un modèle de pièce (WS1) et pour au moins un modèle d'outil (WZ1) pour l'ensemble de l'espace de travail et pour toutes les positions pouvant être prises par une pièce.

7. Dispositif de commande de machine selon la revendication 1, **caractérisé en ce que** le stock de données (D) comprend des paramètres de collision pour au moins un modèle de pièce (WS1) et pour au moins un modèle d'outil (WZ1) pour l'ensemble de l'espace de travail et pour toutes les positions pouvant être prises par un outil.

8. Dispositif de commande de machine selon la revendication 1, **caractérisé en ce que** le stock de données (D) comprend des paramètres de collision pour tous les modèles de pièce (WS1, WS2, WS3, ...) et pour tous les modèles d'outil (WZ1, WZ2, WZ3, ...) pour l'ensemble de l'espace de travail et pour toutes les positions pouvant être prises par une pièce.

9. Dispositif de commande de machine selon la revendication 1, **caractérisé en ce que** le stock de données (D) est compressé.

10. Dispositif de commande de machine selon la revendication 1, **caractérisé en ce que** le stock de données (D) est divisé en stocks de données partiels (D1, D2, D3, ...) qui comprennent chaque fois les paramètres de collision (0/1) pour une combinaison pièce-outil (WZ1-WS1 ; WZ1-WS2 ; WZ1-WZ3 ; WZ2-WS1 ; WZ2-WS2 ...) pour toutes les positions possibles.

11. Dispositif de commande de machine selon la revendication 10, **caractérisé en ce que** les stocks de données partiels (D1, D2, D3, ...) sont chaque fois compressés séparément.

12. Procédé pour déterminer une course de déplacement d'un outil de meulage (3) et/ou d'une pièce (11) sur une meuleuse (1) comportant une tête de meulage (2) et un porte-pièce (9) qui peuvent être déplacés l'un par rapport à l'autre dans plusieurs directions (X, Y, Z, A) dans un espace de travail (R) par un dispositif d'actionnement multiaxial (4, 5, 6, 12), le dispositif d'actionnement (4, 5, 6, 12) étant connecté au dispositif de commande de machine (7, 8), et la meuleuse (1) comportant une unité de traitement (7) avec une unité de mémorisation (8), un stock de données (D) calculé à l'avance pour l'espace de travail (R) divisé en éléments de discrétisation (xᵢyⱼ) étant fourni dans l'unité de mémorisation (8), des paramètres de collision (0 ou 1) étant associés à l'avance aux éléments de discrétisation (xᵢyⱼ) pour des outils donnés (3) et pour des pièces données (11) dans des positions données, et l'absence de collision d'une course de déplacement (P) étant vérifiée à l'aide du stock de données (D) par interrogation des paramètres de collision (0 ou 1) existants invariables et calculables à l'avance pour la course de déplacement (P), le stock de données (D) contenant un paramètre de collision (0 ou 1) pour toutes les positions possibles du disque de meulage (3) et de la pièce brute (11) dans l'espace de travail (R) discrétisé, comprenant quatre dimensions (position X, Y, Z, A), et l'absence de collision de la course de déplacement (P) étant vérifiée lorsque la course de déplacement (P) prévue ne contient aucun élément de discrétisation (xᵢyⱼ) dont le paramètre de collision (0 ou 1) représente une collision.
